# FASCICULE DE BREVET EUROPEEN

(11) **EP 2 154 525 B1**
(45) Date de publication et mention de la délivrance du brevet: **15.06.2011**
(21) Numéro de dépôt: 09290555.3
(22) Date de dépôt: 09.07.2009
(51) Int. Cl.: G01N 27/414, G01N 27/12

(54) **Détection et/ou quantification électrique de composés organophosphorés**
Elektrischer Nachweis und/oder Quantifizierung von Phosphororganischen Verbindungen
Electrical detection and/or quantification of organophosphorous compounds

(30) Priorité: 29.07.2008 FR 0804319
(43) Date de publication de la demande: 17.02.2010
(73) Titulaire: Commissariat à l'Énergie Atomique et aux Énergies Alternatives, 75015 Paris (FR)
(72) Inventeur: Simonato, Jean-Pierre, 38360 Sassenage (FR); Carella, Alexandre, 64110 Mazeres Lezons (FR)
(74) Mandataire: Noel, Chantal Odile

(56) Documents cités:
- EP-A- 1 460 130
- WO-A-02/33732
- WO-A-2006/099518
- DALE T.J., REBEK J.: "Fluorescent Sensors for Organophosphorous Nerve Agent Mimics" JOURNAL OF THE AMERICAN CHEMICAL SOCIETY, vol. 128, no. 14, 2006, pages 4500-4501, XP002518148

## Description

La présente invention est relative à un procédé et un dispositif de détection et/ou de quantification électrique de composés organophosphorés présents sous forme gazeuse ou en solution dans un solvant.

Les composés organophosphorés sont des molécules constituées d'un atome de phosphate auquel sont liés différents groupes chimiques dont la nature détermine les propriétés exactes du composé. Objet de recherches intensives sur les gaz de combat durant et après la seconde Guerre Mondiale qui ont abouti à la mise au point des gaz Sarin, Soman, Tabun, Cyclosarin, GV, VX, VE, VG et VM, et de molécules simulant l'action des organophosphorés neurotoxiques de type DFP (Diisopropylfluorophosphate), DCP (diéthylchlorophosphate) et DMMP (diméthyl-méthylphosphonate), les composés organophosphorés sont aujourd'hui principalement utilisés en agriculture comme insecticides ou herbicides. Parmi la grande variété de pesticides à base de composés organophosphorés existant on peut notamment citer le Parathion, le Malathion, le méthyl Parathion, le Chlorpyrifos, le Diazinon, le Dichlorvos, le Phosmet, le Tetrachlorvinphos et le méthyl Azinphos.

Le mode d'action des composés organophosphorés est basé sur l'affinité de ces derniers pour une enzyme impliquée dans la transmission de l'influx nerveux : la cholinestérase. Les composés organophosphorés ont en effet la propriété de se fixer de façon particulièrement forte et stable au niveau du site actif de cette enzyme. Une fois fixé, le composé organophosphoré empêche la cholinestérase de dégrader l'acétylcholine, neurotransmetteur libéré au niveau des synapses neuronales lors de l'excitation neuronale : faute de dégradation de l'acétylcholine en choline et acétyl inactifs, les neurones sont constamment excités, ce qui peut entrainer la paralysie du système nerveux central et conduire à la mort.

Le mécanisme impliqué dans la transmission de l'influx nerveux qui est bloqué par les composés organophosphorés étant identique dans l'ensemble du règne animal, les composés organophosphorés utilisés comme insecticides sont non seulement toxiques pour les insectes mais également pour tout animal, l'homme y compris. Pour cette raison, malgré leur relative bonne biodégradabilité qui leur a permis de supplanter les insecticides à base de composés organochlorés présentant une biodégradabilité faible, leur toxicité bien supérieure requiert des précautions d'emploi particulières. En effet, les composés organophosphorés peuvent poser de très sérieux problèmes du fait de l'accumulation dans l'environnement ou tout au long de la chaîne alimentaire en cas de présence de résidus sur les végétaux, dans l'eau, ou dans la viande des animaux ayant consommé des aliments contenant des composés organophosphorés. Ces insecticides étant parmi les plus utilisés non seulement dans l'agriculture par les professionnels mais aussi par les particuliers, la détection et le dosage des composés organophosphorés représentent un intérêt de santé publique et serait également particulièrement utile pour l'industrie agro-alimentaire.

En outre, malgré leur interdiction en 1997, les gaz de combat sont toujours une menace. D'une part la production des gaz de combat du type Sarin, Toman, VX est aisée, et d'autre part, ces composés étant inodores et incolores ils peuvent être inhalés sans que l'individu en prenne conscience. La détection immédiate de la présence de tels gaz est donc un enjeu majeur pour protéger les soldats en zone de combat mais aussi les populations civiles face au risque terroriste. Celles-ci sont clairement avérées, notamment depuis l'attentat mortel au Sarin opéré par le groupe terroriste de Aum Shinrikyo dans le métro de Tokyo en 1995.

De nombreuses méthodes et dispositifs de détection des composés organophosphorés ont été développés.

Ainsi, des capteurs chimiques sensibles aux gaz organophosphorés, fonctionnant pour la plupart sur le principe des « nez électronique », sont commercialisés. Le Brevet US 5,571,401, par exemple, décrit un capteur chimique constitué de puces comprenant une résistance composée de polymères non-conducteurs et de matériaux conducteurs : lorsqu'une molécule chimique entre en contact avec les matériaux conducteurs, une différence de résistance est alors détectée. Ces capteurs ont l'inconvénient d'être peu spécifiques et d'être très sensibles aux faux positifs. Des capteurs à base de réseaux bidimensionnels de nanotubes de carbone ont également été mis au point (WO 2006/099518) mais, bien qu'ils soient très sensibles et détectent un grand nombre de molécules, ils ne permettent pas d'obtenir une réponse spécifique et sélective des composés organophosphorés.

Récemment des méthodes de détection sélectives des composés organophosphorés en solution basées sur la mesure de la fluorescence ont été décrites. Zhang *et al*. ont montré qu'en présence d'une molécule possédant une amine à proximité spatiale d'un alcool primaire et un chromophore non plan, flexible et faiblement conjugué, les composés organophosphorés réagissent avec l'alcool primaire, le phosphate obtenu permettant la cyclisation par substitution nucléophile intramoléculaire, stabilisant le chromophore dans le plan et aboutissant à une augmentation de la fluorescence (S.-W. Zhang and T. M. Swager, J.Am.Chem.Soc., 2003, 125, 3420-3421). Cette cyclisation permet donc une détection par fluorescence des agents organophosphorés en solution. L'équipe de J. Rebek, Jr. a ensuite montré que certains dérivés de l'acide de Kemp comportant un alcool primaire proche d'une amine tertiaire sont également de bons candidats pour détecter les espèces organophosphorées neurotoxiques (T. J. Dale & J. Rebek, Jr., J.Am.Chem.Soc., 2006, 4500-4501). Comme S.-W. Zhang *et al*. l'avait précédemment montré, lorsque l'alcool primaire réagit avec un composé organophosphoré, le phosphate obtenu permet la cyclisation par substitution nucléophile intramoléculaire et l'obtention d'un ammonium quaternaire selon la réaction présentée dans le schéma suivant :

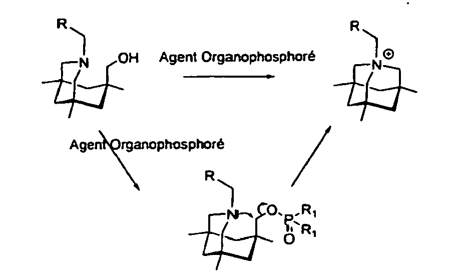

Rebek et coll. ont alors développé des dérivés de l'acide de Kemp où R est un fluorophore. Dans sa forme ouverte, la fluorescence est empêchée par un transfert d'électron photoinduit dû à l'amine. La cyclisation annule ce transfert d'électron et augmente la fluorescence de la molécule. Une exposition de 5 secondes d'un filtre comprenant l'acide de Kemp couplé à un fluorophore dans une atmosphère comportant 10 ppm de DFP permet la détection de cet organophosphoré par fluorescence par lecture sous lampe UV. Cette détection, bien que spécifique a divers inconvénients. Tout d'abord, elle nécessite d'être mise en oeuvre dans un environnement à luminosité réduite. Elle ne peut donc pas toujours être utilisée sur les lieux où la présence des composés organophosphorés est à détecter et en temps réel. D'autre part, elle nécessite l'emploi d'une lampe UV ce qui augmente l'encombrement, et donc diminue la portabilité, du dispositif de détection et/ou de quantification et des composés organophosphorés.

Des méthodes basées sur l'utilisation d'un biocapteur comprenant des enzymes présentant une affinité pour les composés organophosphorés, par exemple la cholinestérase, ont également été développées. Dans la demande PCT WO 2004/040004, des algues unicellulaires exprimant au niveau membranaire l'acétylcholinestérase ont été utilisées pour tester la présence de composés organophosphorés en milieu aqueux, le pourcentage d'inhibition de l'acétylcholinestérase étant corrélé avec la concentration en composés organophosphorés dans le liquide aqueux contrôlé. Cette méthode nécessite la mise en solution des composés organophosphorés avant leur détection.

En résumé, les méthodes de détection des composés organophosphorés actuellement disponibles ont l'inconvénient soit de ne pas être sélectifs des composés organophosphorés, soit d'être utilisables uniquement pour tester un échantillon en solution, soit de nécessiter un lecteur de fluorescence et un environnement à faible luminosité. Le développement d'une méthode rapide, efficace et spécifique, permettant la détection sélective de composés organophosphorés à la fois sous forme gazeuse et en solution, dans tout milieu, quelle que soit sa luminosité, ainsi que la mise au point d'un dispositif à encombrement réduit et bonne portabilité permettant une détection simple, rapide et sélective représentent donc toujours un enjeu majeur dans la protection des soldats en zone de combat, des populations civiles exposée au risque terroriste, et plus largement pour la détection de pesticides organophosphorés.

A cet effet, l'invention utilise la charge positive générée lors de la mise en présence d'une molécule dite « réceptrice » contenant un alcool primaire à proximité spatiale d'une amine tertiaire et d'un composé organophosphoré. L'exposition de la molécule réceptrice à un composé organophosphoré conduit à la formation d'un intermédiaire phosphate ester instable par réaction entre l'alcool primaire et le composé organophosphoré. Il s'en suit une cyclisation intramoléculaire par substitution nucléophile de l'intermédiaire phosphate ester par l'amine tertiaire et la formation d'un ammonium quaternaire. Lors de la réaction de cyclisation, il y a formation d'un sel, et donc génération de charges électriques distinctes (cation et anion). La génération d'une charge par la création de la fonction ammonium permet de modifier de façon brutale l'environnement électrostatique de la molécule.

L'équipe de J. Rebek a montré que ce type de molécule réceptrice réagit avec un composé organophosphoré en solution. En particulier dans la publication T. J. Dale & J. Rebek, Jr., J.Am.Chem.Soc., 2006, 4500-4501, la réaction de cyclisation se produit lorsque le composé organophosphoré sous forme gazeuse est mis en contact avec un papier filtre préalablement imbibé d'une solution de dérivé d'acide de Kemp et séché à l'air.

De façon inattendue, les Inventeurs ont constaté que la cyclisation d'une molécule réceptrice est efficace même lorsque celle-ci est immobilisée sur une surface en monocouche auto-assemblée ou SAM (« Self Assembled Monolayer »). En effet pour de telles couches, les récepteurs auraient pu s'écranter les uns les autres ce qui aurait dû mener à une baisse de réactivité du récepteur.

Dans la présente invention, la présence de composés organophosphorés est donc mise en évidence en visualisant les modifications de l'environnement électrostatique local par analyse des variations de la résistance, de conductance ou de la transconductance d'un dispositif électrique dans lequel la molécule "réceptrice" est greffée sur la partie semiconductrice ou l'une des électrodes. On détecte par ce dispositif électrique la présence d'au moins une charge créée par la réaction entre le composé organophosphoré et la molécule réceptrice. Au sens de la présente invention, les molécules organophosphorées sont des composés organiques contenant un atome de phosphore pentavalent, et notamment ceux présentant la formule chimique suivante P(=W)XYZ, avec W= O, S et X,Y, Z = tout élément ou groupe d'éléments du tableau périodique.

Ainsi, un premier objet de l'invention concerne un dispositif de détection et/ou de quantification de composés organophosphorés comprenant un dispositif électrique comprenant :
- une électrode source et une électrode drain séparées par un matériau semiconducteur, au moins une molécule réceptrice comprenant un groupement R un alcool primaire et une amine tertiaire avec laquelle l'alcool primaire est susceptible de réagir en présence d'un composé organophosphoré, la molécule réceptrice étant greffée par l'intermédiaire du groupement R sur l'une des électrodes ou sur le matériau semiconducteur, et
- un dispositif de détection de la variation de charges positives entre les deux électrodes.

La molécule réceptrice est un dérivé de l'acide de Kemp et a la formule générale I suivante : 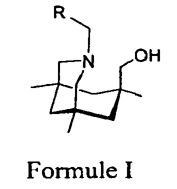 dans laquelle R représente un groupement comprenant une fonction permettant le greffage de la molécule réceptrice sur l'une ou l'autre des électrodes ou sur le matériau semiconducteur.

La molécule réceptrice peut également être une molécule de formule générale II suivante :

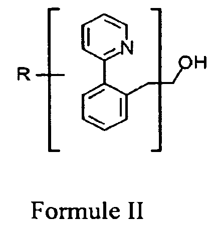

Le dispositif électrique peut être de type résistance, ou bien de type transistor à effet de champ.

Lorsque le dispositif électrique est du type résistance, on détecte et, éventuellement, on mesure, par exemple, la variation de l'intensité du courant entre les électrodes source et drain, variation d'intensité de courant provoquée par la production de charges positives lors de la cyclisation de la molécule réceptrice lorsqu'elle entre en contact avec les composés organophosphorés, à une tension donnée et connue imposée entre les électrodes source et drain. Cette variation d'intensité de courant donne accès à la variation de conductance.

Lorsque le dispositif électrique est du type transistor, la partie semiconductrice est composée d'un matériau semiconducteur diélectrique et comporte de plus une grille.

Là encore, on détecte et, éventuellement, on mesure, par exemple, la variation de l'intensité du courant, à une tension donnée et connue imposée entre les électrodes source et drain traversant le transistor. L'intensité du courant étant une fonction de la tension de la grille, on a alors accès à la transconductance du transistor.

Dans les deux cas, la variation de la conductance ou la variation de transconductance est révélatrice de la présence de composés organophosphorés et est proportionnelle à la concentration en composés organophosphorés.

La molécule réceptrice est greffée soit sur le matériau semiconducteur du dispositif électrique, soit sur l'électrode source, soit sur l'électrode drain. Le matériau semiconducteur qui joue le rôle de canal de conduction est un matériau semiconducteur, avantageusement à base de carbone, de silicium, de germanium, de zinc, de gallium, d'indium, de cadmium, ou d'un matériau semiconducteur organique.

De préférence, le matériau semiconducteur est constitué de nanofils et/ou de nanotubes de silicium ou de carbone.

Plus préférablement, le matériau semiconducteur est constitué de nanofil(s) de silicium gravé(s) sur une surface SOI (Silicon on insulator).

Dans le cas de matériaux semiconducteurs organiques, ceux-ci peuvent être des oligomères, des polymères ou des petites molécules. Par exemple, il peut s'agir de composés aromatiques hétérocycliques tels que les thiophènes et leurs dérivés, de préférence le P3HT (poly-3-hexylthiophène), ou les polypyrroles et leurs dérivés, les arylamines et leurs dérivés, de préférence le PTA (polytriarylamine), les isochromenones et leurs dérivés, des macrocycles hétérocycliques tels que les porphyrines, les phtalocyanines et leurs dérivés. Les matériaux semiconducteurs organiques peuvent également être des acènes polycycliques aromatiques et leurs dérivés, de préférence l'anthracène ou le pentacène, des arylènes et leurs dérivés, par exemple le perylène, le polyparaphenylène, le polyparaphénylènevinylène ou le polyfluorène, des polysilanes et leurs dérivés.

Les électrodes peuvent être métalliques, par exemple en or, en argent, en palladium, en platine, en titane, en silicium dopé, en cuivre ou en nickel.

Le groupement R comprend une fonction permettant le greffage de la molécule réceptrice sur le matériau semiconducteur ou les électrodes.

La fonction permettant le greffage est notamment sélectionnée parmi : hydrocarbure aromatique monocyclique ou polycyclique, saturé ou insaturé ; alcène (type vinylique par exemple) ; alcyne (type acétylénique par exemple) ; composé trihalogénosilane ou triolcoxysilane ; composé diazoïque, sels de diazoniums et dérivés ; azotures ; précurseur radicalaire ; isocyanates et dérivés, organométalliques et dérivés (par exemple de type lithien, organomagnésien, zincique) ; dérivés soufrés tels thiols et mercaptans ; acides carboxyliques ou/et sulfoniques ou/et phosphoriques et leurs dérivés esters ; alcools, phénols ; amines, amides ; halogénures. Ainsi le groupement R est par exemple un éthynylphényl, un vinylphényl, un diazophényl, ou encore un pyrène.

La partie dédiée au greffage du groupement R est adaptée au matériau choisi.

Par exemple, pour le silicium, la partie dédiée au greffage pourra être un alcyne, un alcène, un sel de diazonium, un triazène ou un précurseur radicalaire. Le silicium pourra être recouvert d'une fine couche d'oxyde, comme de l'oxyde natif par exemple. Dans ce cas, la partie dédiée au greffage pourra être un composé silane (par exemple un trialkoxysilane ou un trihalogenosilane) ou toute autre espèce se liant à la surface de l'oxyde.

Dans tous les cas, le greffage de la partie réceptrice pourra être réalisé en une ou plusieurs étapes. Il est, par exemple, possible de faire réagir la surface du semiconducteur avec une première molécule, et de faire ensuite réagir une fonction de cette molécule greffée avec une seconde molécule organique comprenant la partie réceptrice des composés organophosphorés. Par exemple, des étapes de protection/déprotection de la fonction alcool peuvent être envisagés. Il est également possible de greffer la molécule sensible aux organophosphorés sur un substrat préfonctionnalisé, comportant des fonctions réactives (par exemple de type hydrure, hydroxyl, ou bien l'une des fonctions précisées ci-dessus.

Par exemple, le silicium ou son oxyde natif pourront être fonctionnalisés par une première série de molécules organiques comportant des fonctions terminales sur lesquelles la molécule réceptrice sera greffée dans un second temps par les techniques classiques de la synthèse organique, organométallique ou inorganique.

Des assemblages par liaison covalente ou par interactions faibles stabilisantes sont possibles. Par exemple, un assemblage par liaison pi-pi (recouvrement orbitalaire stabilisant) est envisageable, de préférence dans le cas des nanotubes de carbone.

Dans le cas où un ou des nanotubes de carbone sont utilisés comme matériau semiconducteur, la partie dédiée au greffage pourra être :
- un sel de diazonium, un triazène, un précurseur radicalaire quelconque, ou toute molécule susceptible de former des liaisons covalentes avec des atomes de carbone des nanotubes de carbone
- un groupement aromatique (par exemple pyrène, anthracène, porphyrine, etc.) ou un dérivé de la famille des amines permettant une fonctionnalisation non covalente (supramoléculaire) des nanotubes.
- une amine ou un alcool pour une réaction avec les acides carboxyliques présents à la surface des nanotubes de carbone, éventuellement après une activation chimique (par exemple avec un agent de couplage) pour la formation d'esters ou d'amides.

Dans le cas d'un matériau semiconducteur à base de germanium, la partie dédiée au greffage pourra être par exemple un alcyne ou un alcène.

Lorsque le matériau semiconducteur est un arséniure de gallium et d'indium (InGaAs), la fonction de greffage pourra être un composé soufré, par exemple un thiol.

Dans le cas d'un matériau semiconducteur à base de séléniure de cadmium (CdSe) ou de sulfure de cadmium (CdS), la fonction de greffage pourra être une amine ou un composé soufré, par exemple un thiol.

Si le matériau semiconducteur est un oxyde de zinc, la fonction de greffage pourra être un acide carboxylique ou phosphorique.

Si le matériau semiconducteur est un sulfure de zinc (ZnS), la fonction de greffage est un composé soufré, par exemple un thiol.

Dans le cas de semiconducteurs organiques, le récepteur sera intégré lors de la synthèse du matériau organique.

Dans le cas où l'on fonctionnalise l'une des électrodes et où celle-ci est en or, on peut utiliser des dérivés organiques soufrés tels que par exemple, un thiol, un thiol protégé (thioacétate par exemple), disulfure ou autre.

Avantageusement, le groupement R de la molécule « réceptrice » comprend, outre une fonction dédiée au greffage sur le matériau semiconducteur ou sur les électrodes, une partie « espaceur » qui permet de moduler la distance entre la molécule réceptrice et le matériau semiconducteur ou les électrodes.

La partie « espaceur » du groupement R peut être un groupe alkyle en C₁ à C₂₀ pouvant contenir un ou plusieurs hétéroatomes, et/ou un radical aromatique, et/ou un radical hétéroaromatique.

La structure simple du dispositif permet une production à bas coût et à grande échelle. En outre, du fait de cette structure simple, le dispositif peut être de très petite taille, nécessitant peu d'énergie pour fonctionner, favorisant sa portabilité.

Un autre objet de la présente invention concerne un procédé de détection et/ou de quantification de composés organophosphorés comprenant les étapes suivantes :
a) mise en présence de l'échantillon à tester sous forme liquide ou sous forme gazeuse avec un dispositif de détection selon l'invention tel que défini précédemment ;
b) mise en évidence des charges positives générées par la réaction de cyclisation intramoléculaire de la molécule réceptrice induite par le composé organophosphoré en détectant et/ou en mesurant la différence de résistance, de conductance ou de transconductance dudit dispositif.

La présente invention sera mieux comprise à l'aide du complément de description qui va suivre, qui se réfère à un exemple présent à titre illustratif et non-limitatif de préparation du dispositif de détection conforme à l'invention et à sa mise en oeuvre dans une méthode de détection d'un composé organophosphoré.

### Exemple 1 : Fabrication d'un capteur du type transistor pseudo-Mos

### 1.1. Production du dispositif de test

Des dispositifs électriques ont été fabriqués sur du SOI où le matériau semiconducteur est un nanofil de silicium gravé de 280nm de large, 4µm de long et 16 nm d'épaisseur gravé sur une couche d'oxyde de silicium de 77 nm d'épaisseur.

### 1.2. Synthèse du récepteur

Un récepteur où la fonction R est le 4-éthynylbenzyle a été synthétisé à partir du triacide de Kemp. Lors d'une première étape, le triacide de Kemp est transformé en anhydride (produit **1**) par reflux dans le chlorure de thionyle. Après évaporation du chlorure de thionyle résiduel, le produit 1 est mis à réagir avec la 4-iodobenzylamine dans la pyridine à reflux, puis traité par le triméthylsilyldiazométhane. Une réaction de Sonogashira permet d'introduire un alcyne protégé par un groupement triméthylsilyle. Le traitement de la molécule **3** par LiAlH₄ permet la réduction des groupements imide et ester, en groupements respectivement amine et alcool. De façon inattendue, on observe la déprotection du groupement silylé. La cyclisation du dérivé de Kemp **4** obtenu par traitement avec le DFP a été réalisée dans un tube RMN. La cyclisation est totale.

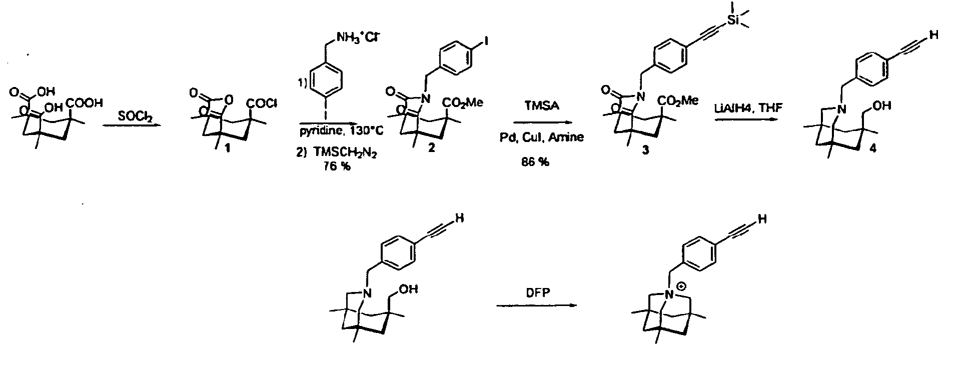

### 1.3. Greffage du récepteur sur le dispositif de test

Le récepteur est greffé sur le dispositif de test par hydrosilylation thermique. Le dispositif est nettoyé à l'aide d'une solution piranha, constituée d'un mélange 3 pour 1 d'acide sulfurique concentré et d'eau oxygéné à 30%, puis traité avec une solution de HF à 1% en poids. Le dispositif activé est chauffé à reflux dans une solution à 0,5 mM du récepteur **4** dans le mesitylène.

### Exemple 2 : Détection de composes organophosphorés par le capteur

On a utilisé le dispositif obtenu à l'exemple 1 pour détecter la présence de composés organophosphorés. Pour cela, le dispositif selon l'invention a été placé dans une enceinte contenant des vapeurs de diisopropylfluorophosphate (10 ppm) pendant une minute.

Dans sa forme ouverte (avant réaction avec une molécule organophosphorée), le récepteur est une molécule neutre (pas de charge électrostatique). La réaction avec une molécule organophosphorée, dans cet exemple le diisopropylfluorophosphate, conduit à une cyclisation et la production d'une charge sous la forme d'un ammonium. La génération de cette charge est détectée électriquement par modification de la conductance du dispositif. Dans les conditions indiquées ci-dessus, une variation relative de la conductance (Δg/g) supérieure à 5% a été mesurée.

## Revendications

1. Dispositif de détection et/ou de quantification de composés organophosphorés comprenant un dispositif électrique comprenant une électrode source et une électrode drain séparées par un matériau semiconducteur, au moins une molécule réceptrice greffée sur l'une des électrodes ou sur le matériau semiconducteur, et
- un dispositif de détection de la variation des charges positives entre ces deux électrodes,
**caractérisé en ce que** ladite au moins une molécule réceptrice à la formule générale I ou II suivantes : 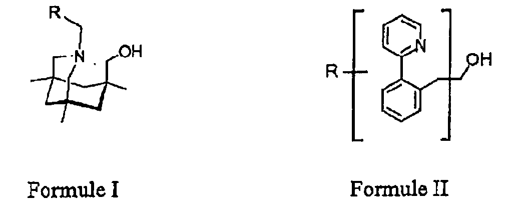 dans lesquelles R représente un groupement comprenant une fonction qui permet le greffage de la molécule réceptrice sur l'une ou l'autre des électrodes ou sur le matériau semiconducteur.

2. Dispositif de détection et/ou de quantification selon la revendication 1, **caractérisé en ce que** le matériau semiconducteur est choisi parmi des matériaux à base de carbone, silicium, germanium, zinc, gallium, indium, cadmium ou un matériau semiconducteur organique.

3. Dispositif de détection et/ou de quantification selon la revendication 1 ou 2 **caractérisé en ce que** le matériau semiconducteur est constitué de nanofil(s) de silicium et/ou de nanotube(s) de carbone.

4. Dispositif de détection et/ou de quantification selon l'une quelconque des revendications précédentes, **caractérisé en ce que** le matériau semiconducteur est un nanofil de silicium.

5. Dispositif de détection et/ou de quantification selon l'une quelconque des revendications précédentes, **caractérisé en ce que** le matériau des électrodes est un métal choisi parmi l'or, l'argent, le palladium, le platine, le titane, le silicium dopé, le cuivre ou le nickel.

6. Dispositif de détection et/ou de quantification selon l'une quelconque des revendications précédentes, **caractérisé en ce que** ledit dispositif électrique est de type résistance.

7. Dispositif de détection et/ou de quantification selon l'une quelconque des revendications 1 a 5, **caractérisé en ce que** ledit dispositif électrique est de type transistor à effet de champ.

8. Dispositif de détection et/ou de quantification selon l'une quelconque des revendications précédentes, **caractérisé en ce que** le matériau semiconducteur est du silicium, la molécule réceptrice étant greffée sur ledit matériau semiconducteur, et **en ce que** la fonction de greffage de groupement R de la molécule réceptrice dédiée au greffage est choisie parmi un alcyne, un alcène, un sel de diazonium, un triazène ou un précurseur radicalaire.

9. Dispositif de détection et/ou de quantification selon l'une quelconque des revendications 1 à 3 et 5 à 7, **caractérisé en ce que** le matériau
semiconducteur est constitué de nanotubes de carbone, la molécule réceptrice étant greffée sur ledit matériau semiconducteur, et **en ce que** la fonction de greffage du groupement R de la molécule réceptrice dédiée au greffage est choisie parmi : un sel de diazonium, un triazène, un précurseur radicalaire, un groupement aromatique, un dérivé de la famille des amines permettant une fonctionnalisation non covalente des nanotubes, une amine ou un alcool.

10. Dispositif de détection et/ou de quantification selon l'une quelconque des revendications 1 à 3 et 5 à 7, **caractérisé en ce que** le matériau semiconducteur est réalisé à base de germanium, la molécule réceptrice étant greffée sur ledit matériau semiconducteur, et **en ce que** la fonction de greffage du groupement R de la molécule réceptrice dédiée au greffage est un alcyne ou un alcène.

11. Dispositif de détection et/ou de quantification selon l'une quelconque des revendications 1 à 3 et 5 à 7, **caractérisé en ce que** le matériau semiconducteur est constitué d'arséniure de gallium et d'indium (InGaAs), la molécule réceptrice étant greffée sur ledit matériau semiconducteur, et **en ce que** la fonction de greffage du groupement R de la molécule réceptrice dédiée au greffage est un composé soufré.

12. Dispositif de détection et/ou de quantification selon l'une quelconque des revendications 1 à 3 et 5 à 7, **caractérisé en ce que** le matériau semiconducteur est réalisé à base de séléniure de cadmium (CdSe) ou de sulfure de cadmium (CdS), la molécule réceptrice étant greffée sur ledit matériau semiconducteur, et **en ce que** la fonction de greffage du groupement R de la molécule réceptrice dédiée au greffage est choisie parmi une amine ou un composé soufré.

13. Dispositif de détection et/ou de quantification selon l'une quelconque des revendications 1 à 3 et 5 à 7, **caractérisé en ce que** le matériau semiconducteur est réalisé à base d'oxyde de zinc, la molécule réceptrice étant greffée sur ledit matériau semiconducteur, et **en ce que** la fonction de greffage du groupement R de la molécule réceptrice dédiée au greffage est choisie parmi un acide carboxylique et un acide phosphorique.

14. Dispositif de détection et/ou de quantification selon l'une quelconque des revendications 1 à 3 et 5 à 7, **caractérisé en ce que** le matériau semiconducteur est réalisé à base de sulfure de zinc, la molécule réceptrice étant greffée sur ledit matériau semiconducteur, et **en ce que** la fonction de greffage du groupement R de la molécule réceptrice dédiée au greffage est un composé soufré.

15. Dispositif de détection et/ou de quantification selon l'une quelconque des revendications 1 à 7, **caractérisé en ce que** les électrodes sont en or, la molécule réceptrice étant greffée sur une des électrodes, et **en ce que** la fonction de greffage du groupement R de la molécule réceptrice dédiée au greffage est un dérivé organique soufré.

16. Procédé de détection et/ou de quantification de composés organophosphorés, **caractérisé en ce qu'**il comprend les étapes suivantes :
- mise en présence de l'échantillon à tester sous forme liquide ou sous forme gazeuse avec un dispositif de détection et/ou de quantification tel que défini dans l'une quelconque des revendications 1 à 15,
- mise en évidence des charges positives générées par la réaction de cyclisation intramoléculaire de la molécule réceptrice induite par le composé organophosphoré en mesurant la différence de résistance, de conductance ou de transconductance dudit dispositif.

## Claims

1. Detection and/or quantification device of organophosphorated compounds comprising an electrical device, comprising a source electrode and a drain electrode separated by a semiconductive material, at least one receptor molecule grafted onto one of the electrodes or onto the semiconductive material, and
- a device for detecting the variation in the positive charges between these two electrodes,
**characterised in that** said at least one receptor molecule has the general formula I or II below: 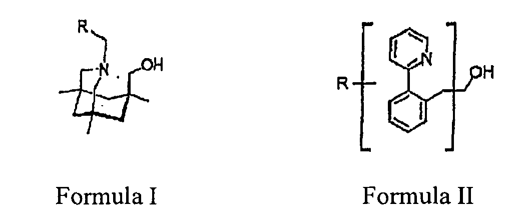 in which R is a group comprising a function which enables the receptor molecule to be grafted onto one or the other of the electrodes or onto the semiconductive material.

2. Detection and/or quantification device as claimed in claim 1, **characterised in that** the semiconductive material is selected from materials with a carbon, silicon, germanium, zinc, gallium, indium, cadmium base or an organic semiconductive material.

3. Detection and/or quantification device as claimed in claim 1 or 2, **characterised in that** the semiconductive material is constituted of silicon nanowire(s) and/or carbon nanotube(s).

4. Detection and/or quantification device as claimed in any one of the preceding claims, **characterised in that** the semiconductive material is a silicon nanowire.

5. Detection and/or quantification device as claimed in any one of the preceding claims, **characterised in that** the material of the electrodes is a metal selected from gold, silver, palladium, platinum, titanium, doped silicon, copper or nickel.

6. Detection and/or quantification device as claimed in any one of the preceding claims, **characterised in that** said electrical device is of the resistor type.

7. Detection and/or quantification device as claimed in any one of claims 1 to 5, **characterised in that** said electrical device is of the field-effect transistor type.

8. Detection and/or quantification device as claimed in any one of the preceding claims, **characterised in that** the semiconductive material is silicon, the receptor molecule being grafted onto said semiconductive material, and **in that** the grafting function of group R of the receptor molecule dedicated to the grafting process is selected from an alkyne, an alkene, a diazonium salt, a triazene or a free-radical precursor.

9. Detection and/or quantification device as claimed in any one claims 1 to 3 and 5 to 7, **characterised in that** the semiconductive material comprises carbon nanotubes, the receptor molecule being grafted onto said semiconductive material, and **in that** the grafting function of group R of the receptor molecule dedicated to the grafting process is selected from: a diazonium salt, a triazene, a free-radical precursor, an aromatic group, a derivative of the family of amines enabling a noncovalent functionalisation of the nanotubes, an amine or an alcohol.

10. Detection and/or quantification device as claimed in any one of claims 1 to 3 and 5 to 7, **characterised in that** the semiconductive material is made with a germanium base, the receptor molecule being grafted onto said semiconductive material, and **in that** the grafting function of group R of the receptor molecule dedicated to the grafting process is an alkyne or an alkene.

11. Detection and/or quantification device as claimed in any one of claims 1 to 3 and 5 to 7, **characterised in that** the semiconductive material is indium gallium arsenide (InGaAs), the receptor molecule being grafted onto said semiconductive material, and **in that** the grafting function of group R of the receptor molecule dedicated to the grafting process is a sulphur-containing compound.

12. Detection and/or quantification device as claimed in any one of claims 1 to 3 and 5 to 7, **characterised in that** the semiconductive material is made with a base of cadmium selenide (CdSe) or cadmium sulphide (CdS), the receptor molecule being grafted onto said semiconductive material, and **in that** the grafting function of group R of the receptor molecule dedicated to the grafting process is selected from an amine or a sulphur-containing compound.

13. Detection and/or quantification device as claimed in any one of claims 1 to 3 and 5 to 7, **characterised in that** the semiconductive material is made with a base of zinc oxide, the receptor molecule being grafted onto said semiconductive material, and **in that** the grafting function of group R of the receptor molecule is selected from a carboxylic acid and a phosphoric acid.

14. Detection and/or quantification device as claimed in any one of claims 1 to 3 and 5 to 7, **characterised in that** the semiconductive material is made with a base of zinc sulphide, the receptor molecule being grafted onto said semiconductive material, and **in that** the grafting function of group R of the receptor molecule dedicated to the grafting process is a sulphur-containing compound.

15. Detection and/or quantification device as claimed in any one of claims 1 to 7, **characterised in that** the electrodes are made of gold, the receptor molecule being grafted onto one of the electrodes, and **in that** the grafting function of group R of the receptor molecule dedicated to the grafting process is a sulphur-containing organic derivative.

16. Method of detecting and/or quantifying organophosphorated compounds, **characterised in that** it comprises the following steps:
- placing the sample to be tested, in liquid form or gaseous form, in the presence of a detection and/or quantification device as defined in any one of claims 1 to 15,
- detecting the positive charges generated by the intra-molecular cyclisation reaction of the receptor molecule induced by the organophosphorated compound by measuring the difference in resistance, conductance or transconductance of said device.

## Patentansprüche

1. Vorrichtung zum Erfassen und/oder zum Quantifizieren von phosphororganischen Verbindungen, mit einer elektrischen Vorrichtung, welche folgendes aufweist: eine Source-Elektrode und eine Drain-Elektrode, die durch ein Halbleitermaterial voneinander getrennt sind, mindestens ein Rezeptormolekül, das auf eine der Elektroden oder auf das Halbleitermaterial aufgepfropft ist, und
- eine Vorrichtung zum Erfassen der Variation der positiven Ladungen zwischen den beiden Elektroden,
**dadurch gekennzeichnet, dass** das mindestens eine Rezeptormolekül die folgende allgemeine Formel I oder II besitzt: 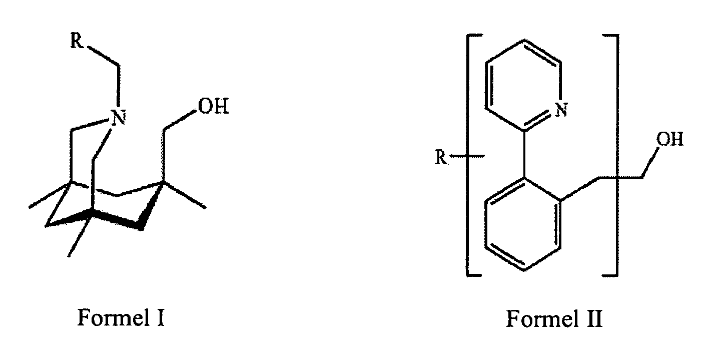 in denen R für eine Gruppe steht, welche eine Funktion aufweist, die das Aufpfropfen des Rezeptormoleküls auf die eine oder die andere der Elektroden oder auf das Halbleitermaterial ermöglicht.

2. Erfassungs- und/oder Quantifizierungsvorrichtung nach Anspruch 1, **dadurch gekennzeichnet, dass** das Halbleitermaterial aus Materialien auf der Grundlage von Kohlenstoff, Silicium, Germanium, Zink, Gallium, Indium, Cadmium oder einem organischen Halbleitermaterial ausgewählt ist.

3. Erfassungs- und/oder Quantifizierungsvorrichtung nach Anspruch 1 oder 2, **dadurch gekennzeichnet, dass** das Halbleitermaterial aus einem Silicium-Nanofaden bzw. aus Silicium-Nanofäden und/oder aus (einem) Kohlenstoff-Nanoröhrchen besteht.

4. Erfassungs- und/oder Quantifizierungsvorrichtung nach einem der vorherigen Ansprüche, **dadurch gekennzeichnet, dass** das Halbleitermaterial ein Silicium-Nanofaden ist.

5. Erfassungs- und/oder Quantifizierungsvorrichtung nach einem der vorherigen Ansprüche, **dadurch gekennzeichnet, dass** das Material der Elektroden ein Metall ist, das aus Gold, Silber, Palladium, Platin, Titan, dotiertem Silicium, Kupfer oder Nickel ausgewählt ist.

6. Erfassungs- und/oder Quantifizierungsvorrichtung nach einem der vorherigen Ansprüche, **dadurch gekennzeichnet, dass** die elektrische Vorrichtung vom Widerstandstyp ist.

7. Erfassungs- und/oder Quantifizierungsvorrichtung nach einem der Ansprüche 1 bis 5, **dadurch gekennzeichnet, dass** die elektrische Vorrichtung vom Feldeffekttranistor-Typ ist.

8. Erfassungs- und/oder Quantifizierungsvorrichtung nach einem der vorherigen Ansprüche, **dadurch gekennzeichnet, dass** das Halbleitermaterial Silicium ist, wobei das Rezeptormolekül auf das Halbleitermaterial aufgepfropft ist, sowie **dadurch**, dass die für das Aufpfropfen ausgelegte Pfropffunktion der Gruppe R des Rezeptormoleküls aus einem Alkin, einem Alken, einem Diazoniumsalz, einem Triazen oder einem radikalischen Vorläufer ausgewählt ist.

9. Erfassungs- und/oder Quantifizierungsvorrichtung nach einem der Ansprüche 1 bis 3 und 5 bis 7, **dadurch gekennzeichnet, dass** das Halbleitermaterial aus Kohlenstoff-Nanoröhrchen besteht, wobei das Rezeptormolekül auf das Halbleitermaterial aufgepfropft ist, sowie **dadurch**, dass die für das Aufpfropfen ausgelegte Pfropffunktion der Gruppe R des Rezeptormoleküls aus einem Diazoniumsalz, einem Triazen, einem radikalischen Vorläufer, einer aromatischen Gruppe, einem Derivat der Familie der Amine, das eine nicht-kovalente Funktionalisierung der Nanoröhrchen ermöglicht, einem Amin, oder einem Alkohol ausgewählt ist.

10. Erfassungs- und/oder Quantifizierungsvorrichtung nach einem der Ansprüche 1 bis 3 und 5 bis 7, **dadurch gekennzeichnet, dass** das Halbleitermaterial auf der Grundlage von Germanium ausgeführt ist, wobei das Rezeptormolekül auf das Halbleitermaterial aufgepfropft ist, sowie **dadurch**, dass die für das Aufpfropfen ausgelegte Pfropffunktion der Gruppe R des Rezeptormoleküls ein Alkin oder ein Alken ist.

11. Erfassungs- und/oder Quantifizierungsvorrichtung nach einem der Ansprüche 1 bis 3 und 5 bis 7, **dadurch gekennzeichnet, dass** das Halbleitermaterial aus Indium-Gallium-Arsenid (InGaAs) besteht, wobei das Rezeptormolekül auf das Halbleitermaterial aufgepfropft ist, sowie **dadurch**, dass die für das Aufpfropfen ausgelegte Pfropffunktion der Gruppe R des Rezeptormoleküls eine schwefelhaltige Verbindung ist.

12. Erfassungs- und/oder Quantifizierungsvorrichtung nach einem der Ansprüche 1 bis 3 und 5 bis 7, **dadurch gekennzeichnet, dass** das Halbleitermaterial auf der Grundlage von Cadmiumselenid (CdSe) oder Cadmiumsulfid (CdS) ausgeführt ist, wobei das Rezeptormolekül auf das Halbleitermaterial aufgepfropft ist, sowie **dadurch**, dass die für das Aufpfropfen ausgelegte Pfropffunktion der Gruppe R des Rezeptormoleküls aus einem Amin oder einer schwefelhaltigen Verbindung ausgewählt ist.

13. Erfassungs- und/oder Quantifizierungsvorrichtung nach einem der Ansprüche 1 bis 3 und 5 bis 7, **dadurch gekennzeichnet, dass** das Halbleitermaterial auf der Grundlage von Zinkoxid ausgeführt ist, wobei das Rezeptormolekül auf das Halbleitermaterial aufgepfropft ist, sowie **dadurch**, dass die für das Aufpfropfen ausgelegte Pfropffunktion der Gruppe R des Rezeptormoleküls aus einer Carbonsäure und einer Phosphorsäure ausgewählt ist.

14. Erfassungs- und/oder Quantifizierungsvorrichtung nach einem der Ansprüche 1 bis 3 und 5 bis 7, **dadurch gekennzeichnet, dass** das Halbleitermaterial auf der Grundlage von Zinksulfid ausgeführt ist, wobei das Rezeptormolekül auf das Halbleitermaterial aufgepfropft ist, sowie **dadurch**, dass die für das Aufpfropfen ausgelegte Pfropffunktion der Gruppe R des Rezeptormoleküls eine schwefelhaltige Verbindung ist.

15. Erfassungs- und/oder Quantifizierungsvorrichtung nach einem der Ansprüche 1 bis 7, **dadurch gekennzeichnet, dass** die Elektroden aus Gold gefertigt sind, wobei das Rezeptormolekül auf eine der Elektroden aufgepfropft ist, sowie **dadurch**, dass die für das Aufpfropfen ausgelegte Pfropffunktion der Gruppe R des Rezeptormoleküls ein schwefelhaltiges organisches Derivat ist.

16. Verfahren zum Erfassen und/oder zum Quantifizieren von phosphororganischen Verbindungen, **dadurch gekennzeichnet, dass** es die folgenden Schritte umfasst:
- Zusammenbringen der zu testenden Probe in flüssiger Form oder in Gasform mit einer Erfassungs- und/oder Quantifizierungsvorrichtung gemäß der Definition in einem der Ansprüche 1 bis 15,
- Nachweisen der positiven Ladungen, welche durch die intramolekuläre, von der phosphororganischen Verbindung induzierte Zyklisierungsreaktion des Rezeptormoleküls erzeugt werden, durch Messen des Unterschieds im Widerstand, in der Leitfähigkeit oder in der Transkonduktanz der Vorrichtung.
